Europäisches Patentamt

European Patent Office

Office européen des brevets

(11) Veröffentlichungsnummer: **0 211 196**
**A1**

# (12) EUROPÄISCHE PATENTANMELDUNG

(21) Anmeldenummer: 86108205.5

(22) Anmeldetag: 16.06.86

(51) Int. Cl.⁴: **A 61 C 19/00**

(30) Priorität: 04.07.85 DE 3523982

(43) Veröffentlichungstag der Anmeldung:
25.02.87 Patentblatt 87/9

(84) Benannte Vertragsstaaten:
DE FR GB IT SE

(71) Anmelder: Mühlbauer, Ernst
Fangdieckstrasse 61
D-2000 Hamburg 53(DE)

(72) Erfinder: Mühlbauer, Ernst
Fangdieckstrasse 61
D-2000 Hamburg 53(DE)

(74) Vertreter: Glawe, Delfs, Moll & Partner Patentanwälte
Postfach 26 01 62 Liebherrstrasse 20
D-8000 München 26(DE)

(54) Verfahren zum Ermitteln von Werkstoffen geeigneter Farben für eine Zahnreparaturschicht oder Prothesenfacette sowie Mustersatz zur Durchführung dieses Verfahrens.

(57) Verfahren zum Ermitteln von Werkstoffen geeigneter Farben für die Grund- und die Deckschicht einer Zahnreparaturschicht oder Prothesenfacette unter Verwendung von aus mehreren Schichten zusammengesetzten Farbmustern. Für die Grund- und die Deckschicht werden gesonderte Muster verwendet. Sie werden durch Benetzung mittels einer Flüssigkeit optisch verbunden. Die Flüssigkeit kann auch selbst zur Bildung einer der Musterschichten herangezogen werden.

EP 0 211 196 A1

Ernst Mühlbauer

0211196

Verfahren zum Ermitteln von Werkstoffen
geeigneter Farben für eine Zahnreparaturschicht oder Prothesenfacette sowie Mustersatz zur Durchführung dieses Verfahrens

**Beschreibung**

Die Erfindung bezieht sich auf ein Verfahren zum Ermitteln
von Werkstoffen geeigneter Farben für die Grund- und die
Deckschicht einer Zahnreparaturschicht oder Prothesenfacette unter Verwendung von aus mehreren Schichten zusammengesetzten Mustern. Die Erfindung bezieht sich ferner auf
einen zur Durchführung dieses Verfahrens geeigneten Mustersatz.

Die natürlichen Zähne des Menschen bestehen aus verschieden
gefärbten Schichten unterschiedlicher Transparenz. Bei der
Zahnreparatur und bei der Herstellung von Zahnersatz begnügt man sich im allgemeinen damit, die Farbe der Reparatur- bzw. Deckschicht unter Zuhilfenahme von Farbmustern
derjenigen des natürlichen Zahns weitgehend anzunähern.

Die dafür in der Praxis zur Verfügung stehenden Farbmuster sind zahn- oder keilförmige Stücke des für die Deckschicht verfügbaren Materials bzw. eines optisch ähnlichen Materials.Weil es bei der Auswahl aber nicht nur auf die Farbe der Deckschicht, sondern auch auf die der optisch beteiligten tieferen Schichten ankommt, führt die Benutzung dieser Muster häufig zu Fehlern in der Farbauswahl. Man hat deshalb auch schon Muster vorgeschlagen, die mehrschichtig aufgebaut sind (DE-OS 26 41 740; DE-OS 14 91 108). Jedoch haben diese sich in der Praxis nicht durchsetzen können, weil die Kombination von mehreren Deckschicht- und Grundschichtfarben in Mustern, in denen diese Schichten fest miteinander verbunden sind, zu einer in der Praxis nicht mehr handhabbaren Vielzahl von Einzelmustern führt. Die Verwendung von lose zusammensetzbaren Einzelmustern führt oft nicht zu brauchbaren Ergebnissen, weil sie nicht in der Weise optisch miteinander verbunden sind, wie dies in der fertig zusammengesetzten Reparaturschicht der Fall ist. Wenn eine sehr genaue Farbwahl gewünscht wird, muß der Zahnarzt daher gegenwärtig im allgemeinen mehrere Probemuster aus denjenigen Reparaturwerkstoffen wirklichkeitsgetreu anfertigen, die nach seinem ersten Eindruck in die engere Wahl kommen. Dies ist sehr umständlich.

Der Erfindung liegt daher die Aufgabe zugrunde, ein Verfahren und einen dafür verwendbaren Farbmustersatz zu schaffen, die die Ermittlung geeigneter Werkstoffe für die Grund- und die Deckschicht einer Zahnreparaturschicht ohne die Anfertigung von wirklichkeitsgetreuen Probemustern und ohne die Notwendigkeit unübersehbarer zahlreicher Farbmustersätze ermöglichen.

Die erfindungsgemäße Lösung besteht darin, daß gesonderte Muster der Grund- und der Deckschicht unter optischer Verbindung durch eine Flüssigkeitsschicht zusammengesetzt werden.

Die Erfindung beruht auf der Erkenntnis, daß dieselbe optische Verbindung, die im fertigen Ergebnis zwischen den unmittelbar und ohne Einschluß einer fremden Luftschicht zusammengesetzten Grund- und Deckschichten vorhanden ist, auch dann zustande kommt, wenn eine Flüssig- keit die Muster benetzt, weil der Brechungsindex einer Flüssigkeit demjenigen der verwendeten Feststoffe wesentlich näher liegt als derjenige von Luft. Die Erfindung zielt auf die breiteste Anwendung dieser Erkenntnis im Bereich der Musterbildung für die Annäherung von Zahnreparaturmaterial oder Zahnersatzmaterial an die natürlichen Farben der Zähne des Patienten ab.

Bei einer ersten Ausführungsform der Erfindung sind gesonderte Grund- und Deckschichtmuster vorhanden, und zwar für jede in Frage kommende Farbe jeweils nur einfach. Ihre Gesamtzahl ist daher vergleichsweise gering und leicht zu übersehen. Zur Bildung eines Farbmusters werden sie zusammengesetzt und optisch dadurch miteinander verbunden, daß eine dünne, transparente Flüssigkeitsschicht zwischen sie eingeschlossen wird, die die beiden einander gegenüber- stehenden Oberflächen der Muster benetzt. Es kann auf diese Weise ein dem optischen Eindruck der herzustellenden Reparaturschicht optimal nahekommender Farbeindruck gewonnen werden.

Als Flüssigkeit für die optische Verbindung zwischen den Mustern wird zweckmäßigerweise eine solche gewählt, die im Brechungsindex den zu verwendenden Materialien möglichst nahekommt und nach Gebrauch wieder leicht zu entfernen ist. Mit Vorteil verwendbar sind klare Flüssigkeiten wie Wasser, Glycerin und Öle.

Wie an sich bekannt, kann in diesem Zusammenhang von Mustern Gebrauch gemacht werden, deren Schichtdicke - beispielsweise aufgrund keilförmiger Gestalt - unterschiedlich ist. Während die Deckschichtmuster durchscheinend sind, wird man das Grundschichtmuster im allgemeinen opak ausführen.

Die Erfindung eignet sich auch zur Nachbildung einer dreischichtigen Kombination, wobei die zwischen der Deckschicht und der Grundschicht anzuordnende Schicht durch die Flüssigkeitsschicht im Modell nachgebildet wird. Dies ist insbesondere dann zweckmäßig, wenn die Zwischenschicht für Färbungszwecke benutzt wird, beispielsweise mittels bekannter Tinter. Soweit es sich um lichthärtende Tinter handelt, können diese unmittelbar als optisch verbindende Flüssigkeit zwischen den Mustern der Grund- und der Deckschicht verwendet werden, da sie während des Mustergebrauchs nicht aushärten und daher leicht von den Mustern abgewischt werden können. Statt dessen können auch nicht härtende Mustertinter verwendet werden, die den später bei der Herstellung der Reparaturschicht zu verwendenden Tintern optisch gleichen und leichter von den

Mustern entfernt werden können als jene.

Ein Farbmustersatz zur Durchführung des erfingungsgemäßen
Verfahrens umfaßt voneinander gesonderte, frei zusammensetzbare Muster für die Grund- und Deckschicht sowie ggf.
Gerät zum Einbringen der optischen Verbindungsflüssigkeit.
Auch die Flüssigkeit selbst kann in geeigneten Behältern
dem Farbmustersatz beigegeben sein. Dazu gehören möglicherweise auch Tinter bzw. den Tintern entsprechende Musterflüssigkeiten.

Wenn die Flüssigkeitsschicht gefärbt ist, um den Einfluß
von Tintern nachzubilden, wird sie bereits als selbständige
Musterschicht zwischen den festen Mustern der Grund- und
der Deckschicht verwendet. Dieser Gedanke kann noch dadurch
weitergeführt werden, daß die Flüssigkeitsschicht als
Muster der Deck- oder der Grundschicht herangezogen wird.
Insbesondere die Verwendung als Muster der Grundschicht
ist sehr vorteilhaft, weil dann nur noch feste Muster der
verfügbaren Deckschicht sowie einige Musterflüssigkeiten
zur Nachbildung der Grundschicht vorhanden sein müssen,
wobei letztere so opak sind, wie dies bei den Grundschichten zu erwarten ist, und auch den vorkommenden Grundschichtfarben entsprechend gefärbt sein können. Die Handhabung ist sehr einfach, weil es lediglich erforderlich
ist, die Deckschichtmuster mit den in Frage kommenden
Grundschichtmusterflüssigkeiten rückseitig zu benetzen.

Umgekehrt kann man auch die in Frage kommenden Deckschichtwerkstoffe durch Musterflüssigkeit nachbilden, die in Verbindung mit festen Grundschichtmustern verwendet werden.

Unter Flüssigkeiten im Sinne der Erfindung werden alle
Stoffe verstanden, deren Viskosität so niedrig ist,
daß sie benetzend auf der Oberfläche eines festen Musterkörpers verteilt werden können. Dazu können auch pastöse
Stoffe gehören.

GLAWE, DELFS, MOLL & PARTNER

Ernst Mühlbauer,
Hamburg

Verfahren zum Ermitteln von
Werkstoffen geeigneter Farben
für eine Zahnreparaturschicht
oder Prothesenfacette sowie
Mustersatz zur Durchführung
dieses Verfahrens

PATENTANWÄLTE     0211196
ZUGELASSENE VERTRETER BEIM EUROPÄISCHEN PATENTAMT

RICHARD GLAWE              KLAUS DELFS
Dr.-Ing.                   Dipl.-Ing.
WALTER MOLL                ULRICH MENGDEHL
Dipl.-Phys. Dr. rer. nat.  Dipl.-Chem. Dr. rer. nat.
ULRICH GLAWE               HEINRICH NIEBUHR
Dipl.-Phys. Dr rer. nat.   Dipl.-Phys. Dr. phil. habil.

8000 München 26            2000 Hamburg 13
Postfach 26 01 62          Postfach 26 70
Liebherrstraße 20          Rothenbaumchaussee

Tel. (089) 22 65 48        Tel. (040) 4 10 20 08
Telex 5 22 505             Telex 2 12 921
Telefax (089) 22 39 38     Telefax (040) 45 89 84

HAMBURG

## Patentansprüche

1. Verfahren zum Ermitteln von Werkstoffen geeigneter
   Farben für die Grund- und die Deckschicht einer Zahnreparaturschicht oder Prothesenfacette unter Verwendung von aus mehreren Schichten zusammengesetzten
   Mustern, dadurch gekennzeichnet, daß die gesonderten
   Muster für die Grund- und die Deckschicht unter optischer Verbindung durch eine Flüssigkeit zusammengesetzt werden.

2. Verfahren nach Anspruch 1, dadurch gekennzeichnet,
   daß eine farblose, durchsichtige Flüssigkeit zwischen
   die festen Grund- und Deckschichtmuster, beide benetzend,
   eingebracht wird.

3.  Verfahren nach Anspruch 2, dadurch gekennzeichnet, daß die Flüssigkeit gefärbt ist.

4.  Verfahren nach Anspruch 1, dadurch gekennzeichnet, daß die Flüssigkeit zur Bildung des Grundschichtmusters opak und ggf. gefärbt ist.

5.  Mustersatz zum Ermitteln von Werkstoffen geeigneter Farben für die Grund- und die Deckschicht einer Zahnreparaturschicht oder Prothesenfacette aus schichtweise zusammengesetzten Mustern dieser Schichten, zur Durchführung des Verfahrens nach einem der Ansprüche 1 bis 4, dadurch gekennzeichnet, daß er voneinander gesonderte, frei zusammensetzbare Muster für die Grund- und Deckschicht umfaßt.

6.  Mustersatz nach Anspruch 5, dadurch gekennzeichnet, daß er feste Musterteile sowie Gerät zum Aufbringen einer Flüssigkeit umfaßt.

7.  Mustersatz nach Anspruch 5 oder 6, dadurch gekennzeichnet, daß er wenigstens einen Behälter für eine geeignete Flüssigkeit umfaßt.

8.  Mustersatz nach Anspruch 7, dadurch gekennzeichnet, daß die Flüssigkeit durchsichtig und gefärbt ist.

9.  Mustersatz nach Anspruch 6, dadurch gekennzeichnet, daß die Flüssigkeit opak ist.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 641 740 (LOHMILLER et al.)<br>* Seite 7, Zeilen 7-27 * | 1,5 | A 61 C 19/00 |
| D,A | DE-A-1 491 108 (ZEISER)<br>* Seite 2, Zeile 16 - Seite 3, Zeile 9; Seite 4, Zeilen 5-13; Figur 2 * | 1,5 | |
| A | US-A-3 964 167 (YERKES)<br>* Spalte 5, Zeilen 33-58; Spalte 7, Zeile 21 - Spalte 9, Zeile 12; Spalte 10, Zeile 62 - Spalte 11, Zeile 46 * | 1,5 | |
| A | US-A-3 405 446 (WIENER)<br>* Spalte 1, Zeilen 11-21; Spalte 2, Zeilen 40-57; Spalte 3, Zeile 50 - Spalte 4, Zeile 4; Figuren 1-5 * | 1,5 | RECHERCHIERTE SACHGEBIETE (Int. Cl.4)<br><br>A 61 C 19/00 |
| A | US-A-2 756 504 (LEVINE)<br>* Spalte 1, Zeile 66 - Spalte 2, Zeile 36 * | 1,5 | |

Der vorliegende Recherchenbericht wurde für alle Patentansprüche erstellt.

| Recherchenort | Abschlußdatum der Recherche | Prüfer |
|---|---|---|
| BERLIN | 25-09-1986 | SIMON J J P |